# EUROPÄISCHE PATENTANMELDUNG

(11) **EP 2 502 730 A1**
(43) Veröffentlichungstag der Anmeldung: **26.09.2012**
(21) Anmeldenummer: 12154384.7
(22) Anmeldetag: 08.02.2012
(51) Int. Cl.: B29C 67/00, B22F 3/105

(54) **Vorrichtung und Verfahren zum Herstellen eines Bauteils in Schichtbauweise**

(30) Priorität: 23.03.2011 DE 102011005929
(71) Anmelder: Bayerische Motoren Werke Aktiengesellschaft, 80809 München (DE)
(72) Erfinder: Meixlsperger, Maximilian, 81925 München (DE); Dr.Skrynecki, Nicolai, 83022 Rosenheim (DE); Dr.Wöllecke, Frank, 82110 Germering (DE)

(57) **Zusammenfassung**

Die Erfindung betrifft eine Trägerstruktur, insbesondere für eine Vorrichtung zum Herstellen eines Bauteils in einem Schichtbauverfahren, mit einer Oberfläche, wobei die Trägerstruktur in einer Hochrichtung, die im Wesentlichen senkrecht zur Oberfläche ausgerichtet ist, verschiebbar gelagert ist. Dabei umfasst die Trägerstruktur eine Mehrzahl einzelner Stempel, die jeweils in Hochrichtung verfahrbar sind. Die Erfindung bezieht sich weiterhin auf eine Vorrichtung mit einer solchen Trägerstruktur sowie auf ein Verfahren zum Herstellen von Bauteilen.

## Beschreibung

Die vorliegende Erfindung betrifft eine Vorrichtung sowie ein Verfahren zum Herstellen von Bauteilen in in Schichtbauweise der im Oberbegriff der unabhängigen Ansprüche angegebenen Art.

Zur Herstellung von Prototypen bzw. von Bauteilen, die nur in geringer Stückzahl benötigt werden, bedient man sich im heutigen Fahrzeugbau des sogenannten Rapid-Prototypings. Hierbei handelt es sich um ein Fertigungsverfahren, bei dem ausgehend von Konstruktionsdaten dreidimensionale Musterbauteile erzeugt werden. In diesem Urform-Verfahren wird aus formlosem Material, z.B. pulverförmigen Kunststoff oder Metall, schichtweise ein Werkstück erzeugt. Als Bauteil kann dabei ein Werkzeug und/oder ein Fertigbauteil realisiert werden. Unter dem Oberbegriff des Rapid-Prototypings werden insbesondere das Elektronenstrahischmelzen, das Laserauftragschweißen, das Strahlschmelzen, die Stereo-Lithographie sowie das selektive Lasersintern gezählt.

Bei diesen Verfahren wird Schicht für Schicht auf eine einteilige Bauplattform das Bauteil aus dem Ursprungsmaterial erzeugt. Je nach Geometrie des Bauteils ist im Allgemeinen eine Support-Struktur vonnöten, die das Bauteil gegenüber der Bauplattform abstützt. Diese Support-Struktur hat darüber hinaus auch die Aufgabe, die eingebrachte Wärmeenergie abzuführen. Nach der Fertigstellung des Bauteils, d.h. nachdem die letzte Schicht erzeugt wurde, muss die Support-Struktur in einem Nacharbeitsvorgang entfernt und entsorgt werden. Dies führt zu einem hohen zeitlichen Aufwand bei der Generierung wie auch bei der Entsorgung der Support-Struktur, und resultiert in einem hohen Materialverbrauch. Beides sind als Nachteile des beschriebenen Verfahrens zu sehen.

Um diese Nachteile zu umgehen, wurde im Stand der Technik versucht, Generative-Verfahren ohne Support-Strukturen zu realisieren, beispielsweise durch das selektive Lasersintern. Hierbei übernimmt ein Pulver, das als Ausgangsmaterial dient, die Support-Funktion und führt damit nicht zu einer Reduzierung des Materialverbrauchs. Durch thermische Schädigung des überschüssigen Pulvers, das lediglich zur Ausfüllung des Bauraums im Prozess mitgeführt wird, kann dieses nur eingeschränkt in einem nachfolgenden Prozess verwendet werden und ist dadurch nur bedingt recycle fähig. Die genannten Nachteile verstärken sich insbesondere, wenn dünnwandige Bauteile mit stark gekrümmten, reliefartigen Verlaufen im Schichtbauverfahren realisiert werden sollen.

Ausgehend von diesem Stand der Technik macht es sich die vorliegende Erfindung zur Aufgabe, ein vereinfachtes Verfahren sowie eine Vorrichtung anzugeben, mit dem bzw. der die Nachteile des Standes der Technik überwunden werden. Ferner ist es Aufgabe der Erfindung, den Materialverbrauch durch die Support-Strukturen zu verringern, wobei gleichzeitig die Prozessgeschwindigkeit des Schichtbauprozesses erhöht wird.

Zur Lösung dieser Aufgabe schlägt die Erfindung eine Trägerstruktur, insbesondere für eine Vorrichtung zum Herstellen eines Bauteils, in einem Schichtbauverfahren vor, mit einer Oberfläche, wobei die Trägerstruktur in einer Hochrichtung, die im Wesentlichen senkrecht zur Oberfläche ausgerichtet ist, verschiebbar gelagert ist. Die Trägerstruktur kann aus einer Mehrzahl einzelner Stempel ausgebildet sein, wobei jeder Stempel in Hochrichtung verschiebbar angeordnet ist.

Weiterhin kann jeder Stempel stirnseitig eine Fläche aufweisen, so dass die Flächen der einzelnen Stempel zusammen die Oberfläche der Trägerstruktur bilden.

Darüber hinaus kann jeder Stempel über einen Aktuator bewegbar sein. Dabei kann der Aktuator ein hydraulischer, ein pneumatischer und/oder elektromechanischer Aktuator sein. Mit diesem Aktuator kann die Position jedes einzelnen Stempels in Z-Richtung verstellt werden.

Zusätzlich oder alternativ kann jeder Stempel temperierbar sein. Hierfür eignet sich insbesondere eine induktive Erwärmung.

In einem weiteren Aspekt betrifft die Erfindung eine Vorrichtung zum Herstellen eines Bauteils, insbesondere in einem Schichtbauverfahren, mit einem Behälter zum Aufnehmen eines pulverförmigen Ausgangsmaterials einer Strahlerzeugungseinrichtung zum Erzeugen eines Energiestrahls, mit dem das pulverförmige Ausgangsmaterial zumindest zu einem Abschnitt des Bauteils verfestigbar ist und einer Trägerstruktur wie oben beschrieben.

Darüber hinaus kann auf der Oberfläche der Trägerstruktur ein Substrat anordenbar sein. Das Substrat ist aus dem gleichen bzw. einem artgleichen Werkstoff wie das Ausgangsmaterial ausgebildet und dient als Bauplattform, bzw. als Unterlage für die Stützstruktur und das Bauteil.

Weiterhin kann auf dem Substrat eine Stützstruktur aus verfestigtem Ausgangsmaterial erzeugbar sein.

Darüber hinaus kann auf der Stützstruktur das Bauteil aus verfestigtem Ausgangsmaterial erzeugbar sein.

In einem weiteren Aspekt betrifft die Erfindung ein Schichtbauverfahren zum Herstellen von Bauteilen, bei dem mit einer Strahlerzeugungseinrichtung Energie in ein pulverförmiges Ausgangsmaterial eingebracht wird, wodurch sich das pulverförmige Ausgangsmaterial verfestigt. Dabei werden einzelne Elemente des Ausgangsmaterials aufgeschmolzen, d.h. in einen flüssigen bzw. teigförmigen Zustand überführt, so dass die ursprünglichen einzelnen Elemente miteinander eine stoffschlüssige Verbindung eingehen. Das Schichtbauverfahren kann die Schritte: Aufbringen eines Substrates auf eine Oberfläche einer Trägerstruktur, die aus mehreren Stempeln gebildet ist, Oberführen der Trägerstruktur in eine erste, vorbestimmte Form, indem die Stempel jeweils in eine vorbestimmte Position gebracht werden, Erzeugen einer Stützstruktur, indem einzelne Abschnitte der Stützstruktur auf einer stirnseitigen Fläche der Stempel generiert werden und Erzeugen des Bauteils, indem schichtweise ein pulverförmiges Ausgangsmaterial aufgetragen und anschließend verfertigt wird, aufweisen.

Weiterhin kann die Oberführung der Trägerstruktur in eine vorbestimmte Form erfolgen, indem jeder Stempel in der Hochrichtung verfahren wird, bis er eine vorbestimmte Position erreicht,

Darüber hinaus kann zum Erzeugen des Bauteils in einem ersten Schrift auf die Stützstruktur eine erste Schicht des pulverförmigen Ausgangsmaterials aufgetragen und verfestigt werden und in einem zweiten Schritt auf die verfestigte Schicht eine weitere Schicht des pulverförmigen Ausgangsmaterials aufgetragen und anschließend verfestigt werden. Der zweite Schritt wird solange wiederholt, bis alle Schichten des Bauteils erstellt wurden.

Weiterhin kann nach dem Erzeugen der Stützstruktur und vor dem Auftragen der ersten Schicht die Stempel der Trägerstruktur in eine zweite vorbestimmte Position überdührt werden.

Die Erfindung bietet den Vorteil, dass bei generativen Verfahren mit Support-Strukturen bzw. die Stütz-Struktur die Prozessgeschwindigkeit wesentlich erhöht und gleichzeitig die Masse der Support-Struktur an sich verringert wird. Ferner kann aufgrund der Reduzierung der Support-Strukturen auch eine verbesserte Temperaturvertellung im Bauraum realisiert werden. Die Verringerung des Bauvolumens führt auch zu einer Reduzierung des Materialbedarfs und zu geringeren thermischen Schädigungen des Ausgangsmaterials. Nicht zuletzt wird damit auch eine Verkürzung des gesamten Produktionsprozess sowie eine Reduktion der Werkzeugkosten erzielt.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind.

Es zeigen in schematischer Darstellung:
- Figur 1: eine bekannte Vorrichtung zum Herstellen von Bauteilen im Schichtbauverfahren,
- Figur 2: eine Vorrichtung mit einer Trägerstruktur gemäß der vorliegenden Erfindung,
- Figur 3: eine Trägerstruktur, die sich in einer ersten vorbestimmten Position befindet,
- Figur 4: eine Trägerstruktur, die sich in einer zweiten vorbestimmten Position befindet, gemäß einer ersten Ausführungsform des erfindungsgemäßen Verfahrens,
- Figur 5: eine Trägerstruktur, die sich in einer zweiten vorbestimmten Position befindet, gemäß einer zweiten Ausführungsform des erfindungsgemäßen Verfahrens, und
- Figur 6: eine Trägerstruktur, die sich in einer zweiten vorbestimmten Position befindet, gemäß einer dritten Ausführungsform des erfindungsgemäßen Verfahrens

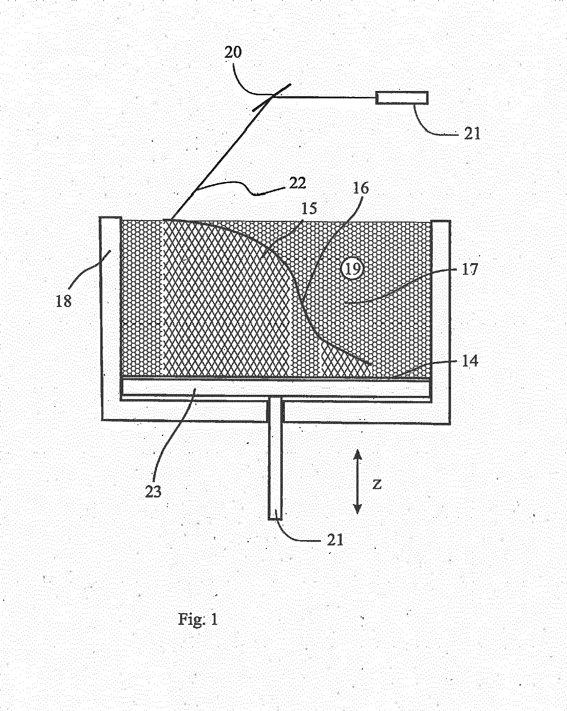

Im Folgenden soll zunächst der prinzipielle Aufbau eine Vorrichtung sowie der prinzipielle Ablauf des Verfahrens beim Herstellen von Bauteilen im Schichtbauverfahren erläutert werden anhand von Figur 1.

Die Figur 1 zeigt eine bekannte Rapid-Prototyping-Vorrichtung, mit der im Schichtbauverfahren Bauteile 16 hergestellt werden können. Die Vorrichtung umfasst eine Strahlerzeugungseinrichtung 21, beispielsweise einen Laser, der einen Laserstrahl 22 aussendet. Dieser Laserstrahl 22 wird über eine Umlenkeinrichtung 20, beispielsweise einen Spiegel, abgelenkt. Die Vorrichtung umfasst ferner ein Behältnis 18 mit Seitenflächen und einer Bodenfläche, die einen Bauraum 19 einschließen. In dem Behältnis 18 ist eine Bauplattform 23 vorgesehen, die über einen Hubstempel 21 in Hochrichtung Z verfahrbar ist. Auf einer dem Bauraum 19 zugewandten Oberfläche der Bauplattform 23 ist ein Substrat 14 vorgesehen. Auf das Substrat 14 wird eine erste Schicht pulverförmigen Ausgangsmaterials 17 aufgetragen. Diese wird aus einem Speicher dem Inneren des Behältnisses 18 zugeführt. Wahlweise kann mit Hilfe einer Verteilvorrichtung, wie beispielsweise einer Wischereinrichtung, das pulverförmige Ausgangsmaterial 17 auf der Oberfläche des Substrats 14 gleichmäßig und dünn verteilt werden. Anschließend wird der Laserstrahl 22 auf die Schicht des pulverförmigen Ausgangsmaterials 17 geleitet, wodurch sich diese verfestigt zu dem Bauteil 16. Je nach Bauteilgeometrie kann vor der Herstellung des Bauteils 16 zuerst eine Stützstruktur 15 erzeugt werden, indem pulverförmiges Ausgangsmaterial 17 verfestigt wird. In der Figur 1 sind zwei Bereiche gezeigt, in denen eine Stützstruktur 15 benötigt wird. Im mittleren, dazwischen liegenden Bereich ist auf eine Stützstruktur 15 verzichtet worden, da die Steigung der Bauteilkontur mit einer horizontalen Linie einen Winkel von mehr als 45° einschließt. In diesen Fällen kann direkt auf die vorhergehende Bauteilschicht aufgebaut werden, ohne dass hierfür eine Stützstruktur 15 benötigt wird.

Nachdem eine aufgetragene Schicht mit Hilfe des Laserstrahls 22 verfestigt wurde, wird die Bauplattform 23 um eine vorbestimmte Höhe abgesenkt und eine neue Schicht des pulverförmigen Ausgangsmaterials 17 aufgetragen. Zur Verfestigung der nächsten Schicht wird wieder mittels Laser Energie eingebracht, die Teile des Ausgangsmaterials 17 anzuschmelzen. Zu Beginn des Verfahrens befindet sich die Bauplattform 23 im oberen Bereich des Bauraums 19 und wird sukzessive nach unten abgesenkt. Figur 1 stellt somit den Endpunkt eines Schichtbauverfahrens dar, in dem das Bauteil 16 gerade vollendet wird.

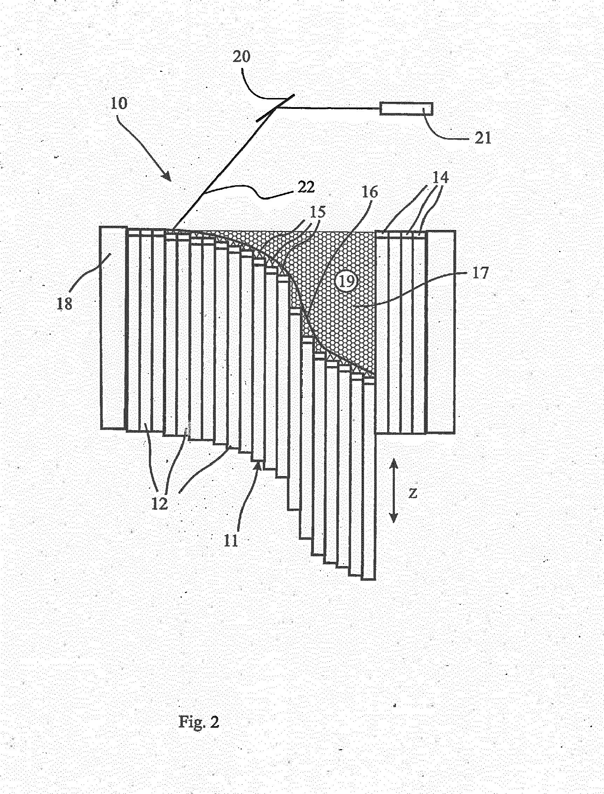

Um die oben beschriebenen Nachteile dieses Verfahrens, nämlich den hohen Bedarf an pulverförmigen Ausgangsmaterial 17 sowie an Stützstruktur 15 zu reduzieren, wird eine Trägerstruktur 11 vorgeschlagen, die eine Vielzahl von Stempeln 12 umfasst. Gleiche Bezugszeichen in Figur 2 bezeichnen dieselben Bauteile wie in Figur 1, die mit Bezug dazu bereits erläutert wurden. Im Unterschied zur Vorrichtung gemäß Figur 1 weist das Behältnis 18 aus Figur 2 Seitenwände auf, jedoch keine Bodenfläche. Diese ist ersetzt worden durch die erfindungsgemäße Trägerstruktur 11, die eine Mehrzahl von Stempeln 12 umfasst. Die Stempel 12 der Trägerstruktur 11 sind in Z-Richtung einzeln verschiebbar und als Matrix-Stäbe, d.h. in einer Matrix-Form angeordnet, wobei deren stirnseitige obere Flächen zusammengenommen die Oberfläche 13 der Trägerstruktur 11 bilden.

In Figur 2 ist das Verfahren zur Herstellung eines Bauteils 16 im Schichtbauverfahren gemäß einer ersten Ausführungsform des Verfahrens in einer ersten vorbestimmten Position dargestellt. Dabei ist die Trägerstruktur 11 in einer vorbestimmten Position dargestellt, wobei die einzelnen Stempel 12 so in Z-Richtung verfahren und positioniert wurden, dass ein endkonturnaher Verlauf der stirnseitigen Flächen erzielt wurde. Mit anderen Worten, der Verlauf der stirnseitigen Flächen der Stempel 12 entspricht nahezu dem Verlauf des herzustellenden Bauteils 16.

Anschließend wird in dieser ersten, vorbestimmten Position der Trägerstruktur 11 zuerst die Stützstruktur 15 erzeugt. Dabei handelt es sich jedoch nicht um die vollständige Stützstruktur 15, sondern jeweils nur um einen ersten Abschnitt der Stützstruktur 15. Nach dem erfindungsgemäßen Verfahren wird zuerst eine Stützstruktur 15 auf dem vierten Stempel von rechts erzeugt. Dies ist in Figur 2 auch der Stempel, der am untersten positioniert ist. Zur Erzeugung dieses ersten Stützstrukturabschnitts 15 wird auf den Stempel 11, der an seinem stirnseitigen oberen Ende ein Substrat 14 aufweist, schichtweise pulverförmiges Ausgangsmaterial 17 aufgebracht und anschließend verfestigt. Danach wird auf der Stützstruktur 15 ein erster Abschnitt des Bauteils 16 erzeugt, indem eine weitere oder mehrere Schichten des pulverförmigen Ausgangsmaterials 17 aufgetragen und verfestigt werden. Durch Wiederholung dieser Schritte wird die Stützstruktur 15 sowie das Bauteil 16 sukzessive erstellt, bis in einem letzten Schritt der letzte Abschnitt des Bauteils 16 erzeugt wurde. Dieser letzte Schritt ist in Figur 2 dargestellt. Der letzte Abschnitt des Bauteils 16 wird dabei gerade von dem Laserstrahl 22 getroffen und erstellt.

Zwischen dem verfestigen einzelner Schichten des Bauteils 16 wird der Bauraum 19 mit Ausgangsmaterial 17 befüllt. Wie aus Figur 2 ersichtlich ist, kann durch die erfindungsgemäße Trägerstruktur 11 die benötigte Menge an Ausgangsmaterial 17 gegenüber dem Stand der Technik wesentlich reduziert werden. Gleiches gilt auch für das Volumen bzw. die Masse der StützStruktur 15, die auf ein Mindestmaß reduziert werden kann, da nur noch gerade so viel Stützstruktur 15 erzeugt werden muss, um die Differenz des konturnahen Verlaufs der Stempel 12 zum Bauteil 16 auszugleichen.

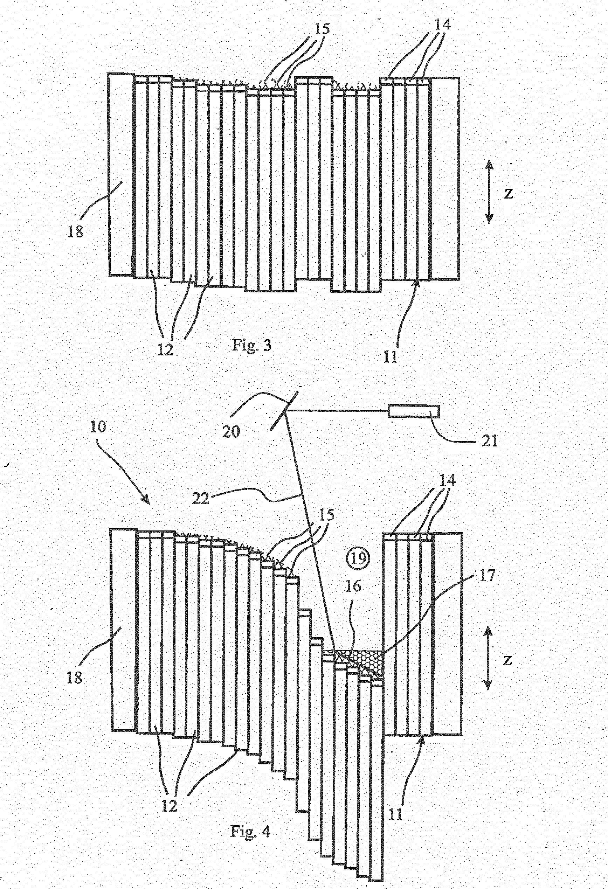

In den Figuren 3 und 4 ist eine zweite Ausführungsform des erfindungsgemäßen Verfahrens abgebildet, die im Folgenden mit Bezug zu diesen Figuren erläutert wird. Im Unterschied zur ersten Ausführungsform der Erfindung, bei der die Stützstruktur 15 abschnittsweise erzeugt wird, erfolgt bei der zweiten Ausführungsform eine sequenzielle Generierung des Bauteils, wobei zuerst die Stützstruktur 15 vollständig erstellt wird und anschließend das Bauteil 16 erzeugt wird. In Figur 3 ist ein Schritt gezeigt, in dem die Stützstruktur 15 erzeugt wird. Hierfür wird die Trägerstruktur 11, die eine von Stempel 12 umfasst, in eine erste vorbestimmte Position überführt. Dabei werden die einzelnen Stempel 12 gerade so weit in Z-Richtung abgesenkt, dass die Abschnitte der Stützstruktur 15 erzeugt werden können. Mit anderen Worten, in den Bereichen, in denen eine Stützstruktur 15 benötigt wird, werden entsprechende Stempel 12 in eine vorbestimmte Position überführt, d.h. abgesenkt und anschließend eine Schicht pulverförmigen Ausgangsmaterials aufgetragen. Diese wird mittels des Laserstrahls 20 verfestigt, so dass sich der Abschnitt der Stützstruktur 15 ergibt. In Figur 3 ist das Ende dieses Vorgangs dargestellt, indem die Trägerstruktur 11 in ihrer ersten, vorbestimmten Position verweilt und die Abschnitte der Stützstruktur 15 vollständig erzeugt wurden.

Anschließend wird die Trägerstruktur 11 in eine zweite vorbestimmte Position überführt, die in Figur 4 dargestellt ist. Dabei werden die einzelnen Stempel 12 so verfahren, dass deren obere stirnseitige Bereiche bzw. die Stützstruktur 15 einen endkontumahen Verlauf zum Verlauf des Bauteils 16 darstellt. Wie bereits oben erläutert, wird danach durch schichtweises Auftragen des pulverförmigen Ausgangsmaterials 17 und Verfestigen mittels Laserstrahls 22 das Bauteil 16 sukzessive erstellt ohne dazwischen Stützstrukturabschnitte 15 zu erzeugen. Figur 4 zeigt einen derartigen Zwischenschritt, in dem gerade der rechte Bereich des Bauteils 16 erstellt wird.

Als Ausgangsmaterial 17 eignen sich hierbei zum einen Kunststoffe, insbesondere thermoplastische Kunststoffe wie Polyamid, PA 12, PA 11 und/oder zum anderen Metalle wie Stahl (z.B. St37), Edelstahl, Aluminium (AlSi 10, AlSi 12), Titan, Gold.

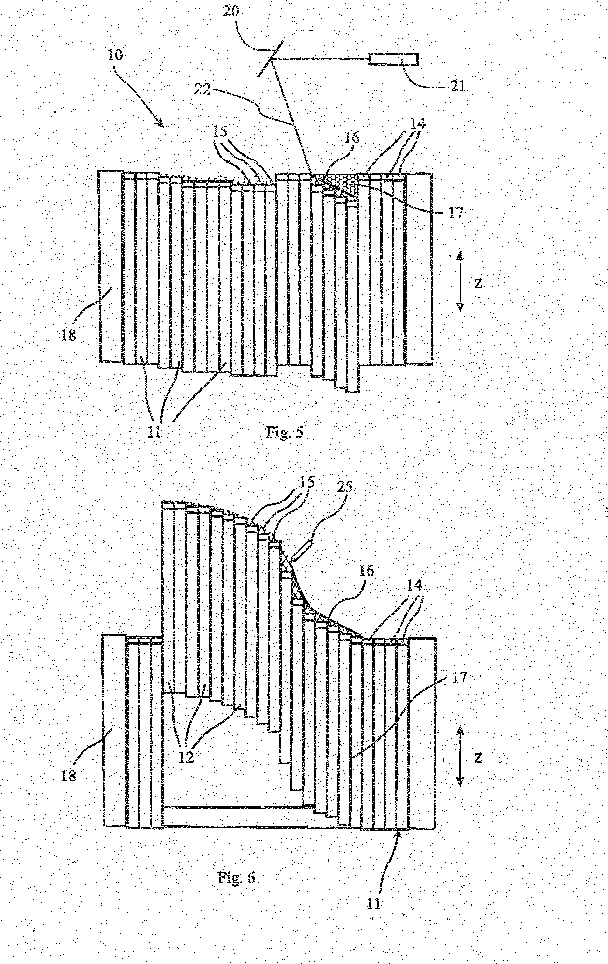

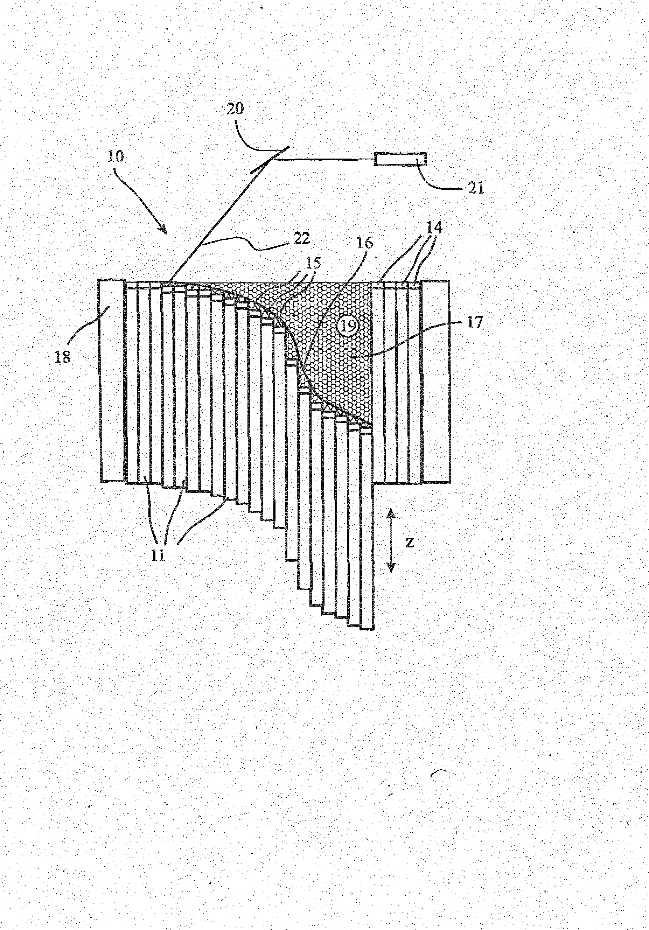

In Figur 5 ist eine weitere Ausführungsform des erfindungsgemäßen Verfahrens gezeigt, deren Verfahrensablauf an die zweite Ausführungsform angelehnt ist und deren Unterschiede zu dieser zweiten Ausführungsform im Folgenden beschrieben werden sollen. Nachdem - wie bereits zu Figur 3 beschrieben - in einer vorbestimmten Position die Stützstruktur 15 vollständig erzeugt wurde, wird die Trägerstruktur 11 in in eine zweite vorbestimmte Position überführt. Hierbei wird nur ein Teil der Stempel 11 verfahren, so dass nur ein Segment des Bauteils 16 im Schichtbauverfahren erzeugt wird. Wie in Figur 5 dargestellt, handelt es sich hierbei um die Stempel 5, 6, 7 und 8 von rechts gezählt in Figur 5, die soweit abgesenkt wurden, dass ein erster Bereich des Bauteils 16 erzeugt werden kann durch Auftragen einer Schicht des pulverförmigen Ausgangsmaterials 17 und Verfestigung dieser Schicht mittels Laserstrahl 22. Nachdem dieser erste Abschnitt bzw. Bereich des Bauteils 16 fertiggestellt wurde, wird der fertige Bereich und weitere Stempel 11 abgesenkt, so dass sukzessive der nächste Abschnitt des Bauteils fertiggestellt werden kann. Selbstverständlich ist es dabei denkbar, dass mehrere einzelne Abschnitte 16 simultan hergestellt werden.

In Figur 6 ist eine weitere alternative Ausführungsform der erfinderischen Trägerstruktur 11 bzw. des erfindungsgemäßen Verfahrens dargestellt. Abweichend von den vorgenannten Ausführungsbeispielen, wird hier das Bauteil im Strahlschmelzen, beispielsweise mittels Laserauftragsschweißen oder thermischem Spritzen aufgetragen, welche ebenfalls Schichtbauverfahren im Sinne dieser Erfindung sind. Hierzu wird wie bereits oben mit Bezug zur zweiten Ausführungsform erläutert, die Trägerstruktur 11, die mehrere Stempel 12 umfasst, in eine erste Position gebracht, in der zuerst eine Stützstruktur 15 erstellt wird. Diese erste vorbestimmte Position entspricht der in Figur 3 dargestellten Position der Trägerstruktur 11. Anschließend werden die Stempel 12 der Trägerstruktur 11 in eine zweite vorbestimmte Position überführt, durch Verfahren der Stempel 12 nach oben, wie in Figur 6 dargestellt. In dieser zweiten Position wird dann mit einem beweglichen Laser 25 das Bauteil 16 erstellt. Als Bauteilmaterial wird hierbei bevorzugt ein Metall, beispielsweise auch aus pulverförmigen Ausgangswerkstoff 17, verwendet. Die in Figur 6 dargestellte Ausführungsform entspricht somit in weiten Teilen der oben beschriebenen zweiten Variante der zweiten Ausführungsform.

In allen beschriebenen Varianten ist die Stützstruktur 15 aus einem niedrig schmelzenden Material ausgebildet, das nach dem Fertigstellen des Bauteils 16 durch anodisches Auflösen von dem Bauteil 16 bzw. von dem Substrat 14 entfernt werden kann. Somit wird die Stützstruktur 15 auf besonders einfache Weise von dem Bauteil 16 getrennt bzw. aus dem Behältnis 18 ausgespült.

### Bezugszeichenliste

- 10.: Lasersintervorrichtung
- 11.: Trägerstruktur
- 12.: Stempel
- 13.: Oberfläche
- 14.: Substrat
- 15.: Stützstruktur
- 16.: Bauteil
- 17.: Pulverförmiges Ausgangsmaterial
- 18.: Behältnis
- 19.: Bauraum
- 20.: Spiegel
- 21.: Strahlerzeugungseinrichtung Laser
- 22.: Laserstrahl
- 23.: Bauplattform
- 24.: Hubstempel
- 25.: Mobiler Laser

## Patentansprüche

1. Trägerstruktur (11), insbesondere für eine Vorrichtung zum Herstellen eines Bauteils (16) in einem Schichtbauverfahren, mit einer Oberfläche (13), wobei die Trägerstruktur (11) in einer Hochrichtung (Z), die im Wesentlichen senkrecht zur Oberfläche (13) ausgerichtet ist, verschiebbar gelagert ist,
**dadurch gekennzeichnet, dass**
- die Trägerstruktur (11) aus einer Mehrzahl einzelner Stempel (12) ausgebildet ist, wobei jeder Stempel (12) in Hochrichtung (Z) verfahrbar ist.

2. Trägerstruktur (11) nach Anspruch 1, **dadurch gekennzeichnet, dass** jeder Stempel (12) stirnseitig eine Fläche aufweist, wobei die Stempel (12) in einer Matrix angeordnet sind, so dass die stirnseitige Flächen der Stempel (12) zusammen die Oberfläche (13) der Trägerstruktur (11) bilden.

3. Trägerstruktur (11) nach Anspruch 1 oder 2, **dadurch gekennzeichnet, dass**
jeder Stempel (12) über einen Aktuator bewegbar ist.

4. Trägerstruktur (11) nach einem der vorhergehenden Ansprüche, **dadurch gekennzeichnet, dass**
der Aktuator ein hydraulischer, pneumatischer und/oder elektromechanischer Aktuator ist.

5. Vorrichtung zum Herstellen eines Bauteils (16), insbesondere in einem Schichtbauverfahren, mit:
- einem Behälter (18), der einen Bauraum (19) umfasst, zum Aufnehmen eines pulverförmigen Ausgangsmaterials (17),
- einer Strahlerzeugungseinrichtung (21, 25), zum Erzeugen eines Energiestrahls mit dem das pulverförmige Ausgangsmaterial (17) zumindest zu einem Abschnitt einer Stützstruktur (15) verfestigbar ist,
**dadurch gekennzeichnet, dass**
der Boden des Bauraums (19) durch eine Trägerstruktur (11) nach einem der Ansprüche 1 bis 4 gebildet ist.

6. Vorrichtung (10) nach Anspruch 5, **dadurch gekennzeichnet, dass** auf der Oberfläche (13) der Trägerstruktur (11) ein Substrat (14) anordenbar ist.

7. Vorrichtung nach Anspruch 6, **dadurch gekennzeichnet, dass** auf dem Substrat (14) die Stützstruktur (15) aus verfestigtem Ausgangsmaterial erzeugbar ist.

8. Vorrichtung nach einem der Ansprüche 5 bis 7, **dadurch gekennzeichnet, dass**
auf der Stützstruktur (15) das Bauteil (16) aus verfestigtem Ausgangsmaterial erzeugbar ist.

9. Verfahren zum Herstellen von Bauteilen (16), bei dem mit einer Strahlerzeugungseinrichtung (21, 25) Energie in ein Ausgangsmaterial (17) eingebracht wird, wodurch das Ausgangsmaterial (17) verfestigt wird, mit den Schritten
- Überführen einer Trägerstruktur (11), wobei die Trägerstruktur (11) aus mehreren Stempeln (12) ausgebildet ist, in eine erste vorbestimmte Form, indem die Stempel (12) jeweils in eine vorbestimmte Positionen gebracht werden,
- Aufbringen eines pulverförmigen Ausgangsmaterials (17) auf eine Oberfläche (13) der Trägerstruktur (11)
- Erzeugen einer Stützstruktur (15) indem einzelne Abschnitte der Stützstruktur (15) auf einer stirnseitigen Fläche der Stempel (12) generiert werden und
- Erzeugen des Bauteils (16) indem Ausgangsmaterial (17) aufgetragen und verfestigt wird.

10. Verfahren nach Anspruch 9, **dadurch gekennzeichnet, dass** zum Überführen der Trägerstruktur (11) in eine vorbestimmte Form jeder Stempel (12) in einer Hochrichtung (Z) verfahren wird, bis er eine vorbestimmte Position erreicht.

11. Verfahren nach einem der Ansprüche 9 oder 10, **dadurch gekennzeichnet, dass** zum Erzeugen des Bauteils (16) ein Schichtbauverfahren angewendet wird, bei dem
- in einem ersten Schritt auf die Stützstruktur (15) eine erste Schicht des pulverförmigen Ausgangsmaterial (17) aufgetragen und verfestigt wird,
- in einem zweiten Schritt auf die verfestigte Schicht, eine weitere Schicht des pulverförmigen Ausgangsmaterial (17) aufgetragen und anschließend verfestigt wird, wobei der zweite Schritt wiederholt wird, bis alle Schichten des Bauteils (16) erstellt wurden.

12. Verfahren nach einem der vorhergehenden Ansprüche, **dadurch**
**gekennzeichnet, dass**
nach dem Erzeugen der Stützstruktur (15) und vor dem -Erzeugen des Bauteils (16) die Stempel (12) der Trägerstruktur (11) in eine zweite vorbestimmte Position überführt werden.

13. Verfahren nach einem der Ansprüche 9, 10 und/oder 12, **dadurch**
**gekennzeichnet, dass**
das Bauteil (16) mittels Laserauftragsschweißen und/oder thermischen Spritzen auf der Stützstruktur (17) erzeugt wird, während sich die Trägerstruktur (11) in einer zweiten, vorbestimmten Position befindet.
